(19) **Europäisches Patentamt**
**European Patent Office**
**Office européen des brevets**

(11) **EP 4 143 618 B1**

(12) **EUROPEAN PATENT SPECIFICATION**

(45) Date of publication and mention
of the grant of the patent:
**06.12.2023 Bulletin 2023/49**

(21) Application number: **21719626.0**

(22) Date of filing: **19.04.2021**

(51) International Patent Classification (IPC):
***H04B 10/116*** *(2013.01)*

(52) Cooperative Patent Classification (CPC):
**G02B 19/0014; G02B 19/0066; G02B 19/0076;**
H04B 10/116

(86) International application number:
**PCT/EP2021/060049**

(87) International publication number:
**WO 2021/219411 (04.11.2021 Gazette 2021/44)**

(54) **LENS FOR USE IN A DETECTOR**

LINSE ZUR VERWENDUNG IN EINEM DETEKTOR

LENTILLE À UTILISER DANS UN DÉTECTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2020 EP 20171915**

(43) Date of publication of application:
**08.03.2023 Bulletin 2023/10**

(73) Proprietor: **Signify Holding B.V.**
**5656 AE Eindhoven (NL)**

(72) Inventor: **BOONEKAMP, Erik, Paul**
**5656 AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
WO-A1-2019/186210     KR-A- 20170 011 975
US-A1- 2016 056 899     US-A1- 2020 014 467

**Description**

FIELD OF THE INVENTION

The present invention relates to a lens. More specifically, it relates to a lens which may be used in optical systems and/or detectors.

BACKGROUND OF THE INVENTION

Lenses of different sorts have been used for multiple purposes and in multiple fields, and there is a vast number of lenses known from the prior art. Lenses may be used e.g. in devices for controlling beam paths, for signaling, for transmitting data, etc. A field with large interest today is the field of optical wireless communication, where lenses may be used to receive and transmit data. One field of rapid development, that is still rather unexploited, is the field of Li-Fi systems which uses modulated light waves to transmit data. Li-Fi systems are an option to the well-established Wi-Fi technology. Compared to Wi-Fi, a Li-Fi system offers a wider bandwidth channel which provides higher fidelity for transmissions, especially in areas susceptible to electromagnetic interference such as aircrafts or hospitals. Further, Wi-Fi signals use wavelengths that allow the signals to extend through for example walls while Li-Fi signals effectively are stopped by matter. This allows for a safer network connection, which may be harder for intruders or hackers to attack. Relevant prior art can be found in US 2020/014467 A, WO 2019/186210 A, US 2016/056899 A, KR 2017 0011975 A.

Lenses used in the prior art, e.g. in the field of Li-Fi systems, are configured to concentrate light waves in order to try to generate a relatively strong signal. However, this approach may lead to problems in that the light waves are focused in one point or a very small area. In other words, adding (potentially different) signals together to create a stronger signal, may lead to a possible loss of information. It should be noted that this approach may also result in that the information regarding where the signal originated from is lost.

Therefore, there is a need for alternatives to the lenses used in the prior art to solve these issues. In particular, it is of interest to provide a lens that is compact, capable of receiving light waves from multiple emitters and transmitting said light waves while still being able to separate signals from different emitters. It is also of interest to provide a lens that can receive light waves from emitters that may be arranged in a relatively large area.

Hence, it is an object of the present invention to provide an alternative to the lenses in the prior art within one or more of these technical areas. In particular, it is of interest to provide a lens which may be used in optical systems or detectors (e.g. Li-Fi detectors) in order to achieve one or more of the desirable effects described above, while keeping the lens design compact.

SUMMARY OF THE INVENTION

Relative direction determination can allow the closest signal source which may allow safer and faster communication with less energy consumption. Therefore, there is a need for alternatives to the lenses used in the prior art. In particular, it is of interest to provide a lens which is compact and capable of receiving light waves from multiple emitters, while still being able to separate signals from different emitters. It is also of interest to provide a lens that is able to receive light waves from emitters that may be distributed over a relatively large area.

Hence, it is an object of the present invention to provide an alternative to the lenses in the prior art within one or more of these technical areas. In particular, it is of interest to provide a lens which may be used in optical systems or detectors (e.g. Li-Fi detectors) in order to achieve one or more of the desirable effects described above, while keeping the lens design compact.

This and other objects are achieved by providing a lens having the features in the independent claim. Preferred embodiments are defined in the dependent claims.

Hence, according to a first aspect of the present invention, there is provided a lens having an optical axis. The lens comprises a first part in the form of a spherical cap of a first sphere with a first radius $r_0$, and a second part in the form of a spherical segment of a second sphere with a second radius $r_j$, wherein $r_j$ is equal to or larger than $r_0$, and wherein the centers of the first sphere and the second sphere coincide in a point on the optical axis. The second part has a top side facing towards the first part and a base side facing away from the first part. The base side comprises a plurality of concentric sections, each section having a first surface that faces away from the optical axis and a second surface that faces towards the optical axis. Each first surface has the form of a spherical zone of a third sphere with a center that coincides with the previously mentioned point on the optical axis. For each section, the first surface and the second surface have a common circular base edge located in a first plane at the base side of the second part. The second part is configured to transmit at least one light wave of the light waves received by the first part and to project the at least one light wave via the plurality of concentric sections onto a second plane parallel to the first plane.

The term "lens" should be interpreted to refer to substantially any transmissive optical element or device that is configured to focus or disperse light by means of refraction.

The lens according to the first aspect comprises two parts: a first part and a second part. The first part is configured to receive light waves and to transmit at least one of the received light waves to the second part. The second part is configured to receive at least one light wave from the first part and to project at least one of the light waves received from the first part to a planar focal surface.

The first part of the lens has the shape of a spherical cap. A spherical cap is a portion of a sphere cut off by a plane. The sphere of which the first part is a spherical cap is called the first sphere. This first sphere has a radius $r_0$ and a center that is located in a point on the optical axis of the lens.

The second part of the lens has the shape of a spherical segment. A spherical segment is the solid defined by cutting a sphere with a pair of parallel planes. The sphere of which the second part is a spherical segment is called the second sphere. This second sphere has a radius $r_j$ and a center that is located in the same point on the optical axis of the lens as where the center of the first sphere is located.

The base side of the second part, which is the part that faces away from the first part, has a plurality of concentric sections. Each section has a first surface that faces away from the optical axis of the lens and a second surface that faces towards the optical axis. Each first surface has the form of a spherical zone. A spherical zone is the surface of a spherical segment, excluding the base of the spherical segment. The sphere of which the first surface is a spherical zone is called the third sphere. This third sphere has a center that is located in the same point on the optical axis of the lens as where the centers of the first and second spheres are located.

In the lens according to the first aspect, the concentric sections in the base side of the second part are configured to refract light waves and transmit said light waves to a focal plane. The focal plane to which light waves are transmitted is substantially the same plane for all sections, and it is referred to as the second plane. This allows the light waves to be focused on the second plane, while the position of the focused light wave is determined by the angle of incidence of the incoming light waves. The radii of the third spheres, the number of concentric sections, and the separation between adjacent sections are free to be chosen as per need.

Each of the concentric sections in the second part has a first surface that faces away from the optical axis of the lens and that has the form of a spherical zone of a third sphere with a center that is located in the same point on the optical axis of the lens as where the centers of the first and second spheres are located. In other words, each first surface of a section is associated with a third sphere. Each third sphere has a third radius $r_i$, wherein i = 1, 2, ..., $N$, and wherein N is the number of sections. It will be appreciated that the shape and/or position of the sections can be tuned to create an optimal focusing or to create a more blurred focus. The lens of the present invention is further advantageous in that it allows light waves of different angles of incidence to be imaged on the same focal plane.

The lens may be configured to have steps in angles $\alpha_i$ that are substantially equal between all sections. Each angle $\alpha_i$, is here defined as the angle between a focal length $f_i$ and the subsequent focal length $f_{i+1}$. Having equal steps in angle $\alpha_i$ between sections is advantageous in that the lens is at least partly optimized. Being optimized may refer to maintaining sufficient signal quality for signals, of e.g. modulated light waves, from different locations, or achieving desired optical properties It is to be understood that the number of sections, the radii of the third spheres associated with the spherical zones of the first surfaces and the steps in angle $\alpha_i$ maybe varied to suit a plurality of applications.

Each section of the plurality of concentric sections has a first surface that faces away from the lens of the optical axis, wherein the first surface has the form of a spherical zone of a third sphere. In other words, each first surface of a section is associated with a third sphere. Each third sphere has a third radius $r_i$, wherein i = 1, 2, ..., $N$, and wherein $N$ is the number of sections. Among these radii, the smallest $r_i$ ($i$ = 1) is the radius of the third sphere that is associated with the first surface of the section that is nearest to the optical axis of the lens. This smallest $r_i$ corresponds to the shortest focal length, which in turn defines the space between the first plane corresponding to the base of the second part and the second plane corresponding to the focal plane of the lens. A smaller third radius $r_i$ for the section nearest to the optical axis of the lens may be desirable since it will allow the implementation of the lens in a detector with reduced height.

The first part of the lens has a spherical surface, and the spherical surface may be provided with an anti-reflection layer.

A carefully chosen anti-reflection layer on the receiving surface of the first part that matches the application wavelength or bandwidth may significantly improve the amount of light captured by the lens. This increases the optical efficiency of the lens which is advantageous when used in e.g. a detector, since it may improve the overall function of the detector.

The lens may comprise a polymer. The lens may be realized with commonly used low-cost optical materials such as a polymer, for example PMMA, polycarbonate, or silicone. The lens with lighter weight and easy manufacturability may be realized using polymer based optical materials.

The lens may comprise a glass with a refractive index n, wherein $n > 1.5$.

Glass based materials may be considered as well. One way to reduce the size of the lens for use in portable and mobile devices is by using optical materials with a relatively high refractive index. This is because increasing the refractive index of the lens may improve the concentration ratio. Some commercially available optical material with a high refractive index would be S-LAH79 (n = 2.00, Ohara corporation) and N-LASF44 (n = 1.8, Schott AG).

The first part and the second part of the lens may be fabricated from the same or different materials.

The lens may be fabricated individually as separate components. Then, they can be glued together utilizing an optical adhesive to form one single, robust, and mechanically stable optical body.

The first and second parts may be a single element, formed by e.g. a single piece of glass and/or plastic. The first and second parts may alternatively be two separate elements which are adjacently arranged. The first part and the second part may constitute one single ball lens. By "ball lens" it is meant substantially any lens with a spherical shape. The lens may be fabricated monolithically, for example by means of additive or subtractive manufacturing techniques such as injection molding, transfer molding, and 3D printing.

The first part of the lens has the form of a spherical cap. An example of a spherical cap is a hemisphere.

The first part of the lens is arranged to collect light from a wide range of angles of incidence.

The first part may be arranged to receive light waves at angles of incidence at least up to 50 degrees with respect to the optical axis of the lens.

The maximum angle of incidence is the maximum angle from the optical axis of the lens at which incoming light waves can be captured. A large angle of incidence is desired to ensure a sufficient field of view such that most of the access points can be images by the optical detector. Angles of incidence up to at least 50 degrees may be sufficient.

The lens may be arranged such that the first radius of the first sphere associated with the spherical cap of the first part is smaller than the second radius of the second sphere associated with the spherical segment of the second part. If this is the case, the top side of the second part defines a rim around the first part. The rim is preferably opaque to prevent or limit unwanted ambient light from entering the lens directly through the second part.

According to a second aspect of the present invention, there is provided a detector for detecting light waves comprising a lens according to the first aspect of the present invention. The detector further comprises a photodetector comprising a plurality of segments. Each segment of the plurality of segments is arranged to receive at least one light wave of the light waves transmitted by the lens.

The detector according to the second aspect of the present invention comprises a photodetector. By "photodetector" it is meant substantially any element capable of detecting light/electromagnetic radiation/photons and converting the light into a current/electrical signal. The photodetector is provided to detect the light waves and to generate a current and/or an electrical signal based on the detected light waves. The signal generated at the photodetector may comprise data. The data may be coded in the form of information about the wavelength(s) of the incident light wave(s) on the segment, a total photon count, a photon detection frequency, the modulation of the light waves, or any combination of these. The information in the signal (e.g. data transmitted by the modulation of the modulated light waves) is further transmitted in the current and/or electrical signal. The current and/or electrical signal may then be received as data, e.g. by a computer.

Furthermore, the photodetector should be arranged in the focal plane of the lens according to the first aspect of the present invention. This allows light waves originating from different locations to be projected/imaged on the same photodetector.

Each segment of the plurality of segments is arranged to receive at least one light wave of the light waves transmitted by the lens. The detector according to the second aspect is advantageous in that the photodetector is segmented, i.e. that the photodetector comprises a plurality of segments that substantially are photodetectors of relatively small size, wherein each segment can detect light waves independently of each other. By "independently of each other" is here meant that each segment may detect light waves and generate a signal based on the photons that are only incident on that segment. Thus, each segment may generate a signal distinguishable from all other segments. It is also an option to combine one or more signals to create a stronger signal.

The photodetector may be a silicon (Si) photodiode. This is advantageous since photodetectors of this kind are relatively small, may have low noise, high speed and/or high spectral response. It is to be understood that the photodetector may be any detector capable of detecting photons/light waves and creating a signal.

Because the photodetector is segmented and light waves with different angles of incidence are focused on approximately the same plane, the photodetector can detect the signal from multiple emitters of light waves separately, at least partially. This is especially advantageous when the light waves are modulated light waves. Therefore, the detector may also allow multi-channel communication thereby increasing the bandwidth of communication.

Another advantage of the present invention is that the photodetector segment with the highest/strongest signal, i.e. the segment detecting the highest number of photons from the incident light waves, may indicate the direction of the closest emitter and/or the emitter with the strongest transmitted signal. The signal generated by a segment may comprise information about the wavelength(s) of the incident light wave(s) on the segment or a total photon count or a photon detection frequency or the modulation of the light waves. It is to be understood that any combination of these may be comprised of a signal.

Furthermore, in a situation where the detector is receiving light waves from a plurality of emitters, the detector may distinguish a signal emanating from one (specific) emitter. If the light waves received are modulated light waves, the detector could be used in e.g. a Li-Fi system. The detector may distinguish a signal from a specific emitter which would allow for a more energy efficient detector system (e.g. a Li-Fi system), as well as a more reliable system since there is a possibility to choose to send a signal back to an emitter from which a strong signal has been received. For example, an emitter further away with the higher signal can be a better choice as a target emitter than the closest emitter due to e.g. obstructions or interference.

The detector according to the second aspect is advantageous in that it may receive light waves from different angles of incidence and image the light waves on a planar detector. It is further advantageous in that it can separate signals from different emitters. Consequently, a more efficient detector (e.g. a Li-Fi detector) is provided compared to detectors in the prior art. Furthermore, the reception of light waves may be performed in a more efficient manner. Hence, the detector of the second aspect of the present invention improves the optical and/or space efficiency.

In the detector according to the second aspect of the present invention, the lens and the photodetector can be arranged such that they are separated by a volume of air.

Accordingly, the lens may be configured to have longer focal lengths which allow for a more lenient design of the lens. Alternatively, the volume separating the lens and the photodetector can be any other transparent optical material considering the wavelength of light waves. It is to be understood that the volume alternatively may be interchangeable with any other transparent substance such as plastic or glass.

The volume between the lens and the photodetector can be enclosed by a cylindrical opaque cover, and the cylindrical opaque cover may be arranged at least partially around the second part of the lens. The cylindrical opaque cover is configured to shield the volume separating the detector and the lens, and preferably also at least a part of the second part of the lens, from incoming light. This is advantageous in that the cover prohibits light waves to enter the detector without first passing through the first part of the lens, which gives a higher signal to noise ratio and light yield for the detector. Consequently, the detection of light waves at the photodetector is improved. A further advantage is that the cover may be configured to hold the lens and the photodetector together. Accordingly, the cover may provide structural support. The cylindrical opaque cover, the lens, and the photodetector may form one single detector unit. The detector unit may be rigid.

The cylindrical opaque cover may be light absorbing.

Light absorbing materials such as (black) paint can be used to realize the cylindrical opaque cover. Alternatively, a reflecting metal layer can be used to satisfy the purpose.

Each segment of the plurality of segments of the photodetector may have a hexagonal form, wherein the segments of the plurality of segments are arranged (tiled) adjacent to each other.

This is advantageous because the segments are placed in an efficient pattern minimizing the perimeter of the plurality of segments, with almost no dead space between the different segments. However, other geometries for the segments such as rectangular, triangular, or circular can be applied as well.

According to a third aspect of the present invention, there may be provided a detector arrangement comprising a Universal Serial Bus (USB) device. The USB device, in its turn, comprises a detector according to the second aspect of the present invention, wherein the detector is communicatively connected to the USB device.

The detector according to the second aspect of the present invention can be part of a device that contains a commonly used data transfer interface. The device can be a mobile or a portable device where the data transfer interface can be popularly used USB type which can be connected to a computer. Therefore, the light waves detected by the detector can be transferred for the desired purpose.

Furthermore, it may be beneficial to use a relatively small photodetector, e.g. with a total area which is less than 100 mm$^2$. This is advantageous in that the size of the photodetector may be relatively small. Thus, the photodetector can be small enough to be conveniently fitted into the above-mentioned device, e.g. a USB stick or dongle. The cylindrical opaque cover may be part of a structure in which the detector is arranged, e.g. a USB stick or dongle. Hence, the structure in which the detector is arranged may block light from penetrating the second part.

According to a fourth aspect of the present invention, there may be provided a system comprising a detector according to the second aspect of the present invention. The system may further comprise at least one emitter configured to emit light waves detectable by the detector.

The device with the detector arrangement can be part of an optical wireless communication system that may comprise one or more emitters for transmitting data or information in the form of light waves. The aforementioned device including the detector can be part of the communication system for establishing one or more communication links with the emitters.

BRIEF DESCRIPTION OF THE DRAWINGS

Embodiments of the invention will now be described, by way of example only, with reference to the accompanying schematic drawings in which corresponding reference symbols indicate corresponding parts, and in which:

Fig. 1 schematically shows a cross-sectional view of a lens;
Fig. 2 schematically shows a cross-sectional view of a detector;
Fig. 3 schematically shows a perspective view of a detector comprising a lens and a photodetector;
Fig. 4 shows a top view of a photodetector;
Fig. 5 schematically shows a perspective view of a detector;

Figs. 6a-6d show multiple perspective views of a lens;

Figs. 7a-7b show a side view and a perspective view of a lens, respectively; and

Fig. 8 shows a view of a system comprising a detector and emitters emitting light waves.

As illustrated in the figures, the sizes of layers and regions are exaggerated for illustrative purposes and, thus, are provided to illustrate the general structures of embodiments of the present invention. Like reference numerals refer to like elements throughout.

DETAILED DESCRIPTION OF THE EMBODIMENTS

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

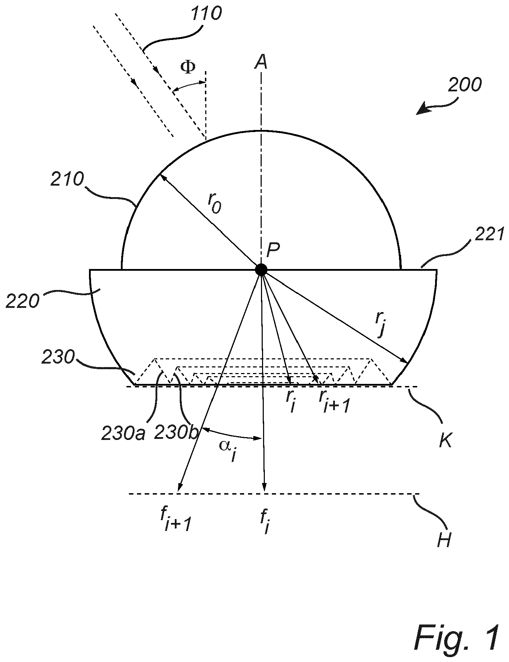

Figure 1 shows a cross-sectional view of a lens 200 with an optical axis A. The lens 200 comprises a first part 210 configured to receive light waves 110. The first part 210 has the form of a spherical cap of a first sphere with a center located in point P on the optical axis A. The first sphere has a first radius $r_0$.

The lens 200 further comprises a second part 220 adjacently arranged to the first part 210. The second part 220 has the form of a spherical segment of a second sphere with a second radius $r_j$. The center of the second sphere coincides with the center of the first sphere in point P on the optical axis A.

The second part 220 has a top side that is facing towards the first part 210 and a base side that is facing away from the first part 210. The base side of the second part 220 comprises a plurality of concentric sections 230. Each section 230 comprises a first surface 230a that is facing away from the optical axis A and a second surface 230b that faces towards the optical axis A.

For each section, the first surface 230a and the second surface 230b have a common circular base edge located in a first plane K perpendicular to the optical axis A.

Each first surface 230a has the form of a spherical zone of a third sphere with a center coinciding with the point P on the optical axis A.

Figure 1 further shows a second plane H parallel to the first plane K. The second part 220 is configured to transmit at least one light wave of the light waves 110 received by the first part 210 and to project the at least one light wave via the plurality of sections 230 onto the second plane H.

In Figure 1, the first part 210 has the form of a spherical cap of a first sphere with a first radius $r_0$ and a center in point P on the optical axis A. The second part 220 has the form of a spherical segment of a second sphere with a second radius $r_j$ and a center in point P on the optical axis. The second radius $r_j$ of the second sphere can be equal to or larger than the first radius $r_0$ of the first sphere. In the lens illustrated in Figure 1, the second radius $r_j$ is larger than the first radius $r_0$, which results in a rim 221 on the top side of the second part 220 that surrounds the first part 210.

For each section 230, the first surface 230a has the form of a spherical zone of a third sphere with a center in the point P on the optical axis. For each first surface 230a, the third sphere associated with the spherical zone has a third radius $r_i$, wherein $i = 1, 2, \ldots , N,$ and wherein $N$ is the number of sections 230. It is understood that the radii $r_i$ and $r_0$ illustrated in Figure 1 are exemplary radii and that the radius $r_i$ can be smaller than $r_0$. The difference between the two radii may also be different in different embodiments, and the skilled person would understand that there are many ways to choose the different radii.

The refractive index of the first part 210 may differ from the refractive index of the second part 220. Furthermore, the refractive index of the first part 210 and the second part 220 may be the same.

Furthermore, in Figure 1 focal lengths $f_i$ and $f_{i+1}$ are shown to end up at the second plane H. Each section 230 will, together with the first part 210 and the second part 220, have a respective focal length. This is partly due to the different third radii associated with the sections 230. The angle between one of these focal lengths $f_i$ and the subsequent focal length $f_{i+1}$ is illustrated in Figure 1 as $\alpha_i$. The spacing between the sections 230 may be determined by for example choosing an equal spacing in angle $\alpha_i$. The spacing between the sections 230 may also be different and not include equal spacing in angle $\alpha_i$. A focal length $f_i$ of the lens may depend on $r_i$, the refractive index $n$ of the lens 200, and the angle $\alpha_i$, according to the following formula:

$$f_i = \frac{r_i n}{2(n - 1)\cos \alpha_i}$$

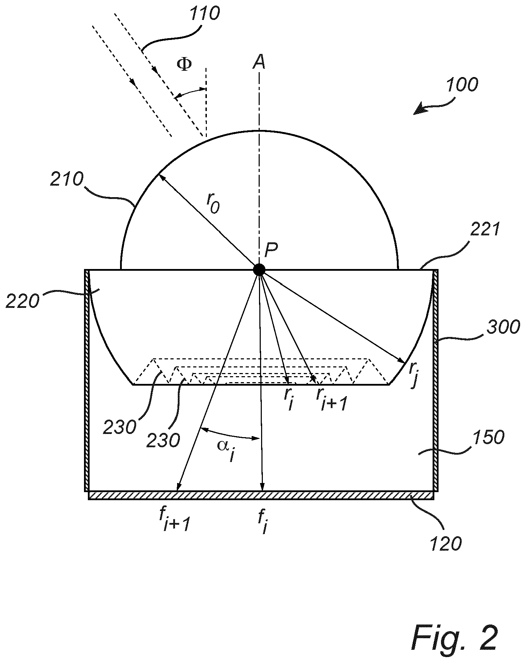

Figure 2 shows a cross-sectional view of a detector 100. The detector 100 comprises a lens that corresponds to the lens 200 of Figure 1, and it is referred to Figure 1 for the associated text for an increased understanding.

The detector 100 of Figure 2 further comprises a photodetector 120 extending along a plane that coincides with plane H as illustrated in Figure 1, perpendicular to the optical axis A. The light waves 110 have an angle of incidence $\Phi$. The photodetector 120 is configured to receive the light waves 110 transmitted by the plurality of sections 230. The photodetector 120 comprises a plurality of segments (not shown in Figure 2). Each segment is configured to receive at least one light wave of the light waves 110 depending on the angle of incidence. The light waves 110 may for example be modulated light waves configured to carry information. Such modulated light waves may be used with the detector 100 in a LiFi-system for achieving an Internet or data connection.

Furthermore, the detector 100 of Figure 2 comprises a volume 150 defined by the separation between the lens 200 and the photodetector 120. The volume 150 can be air. It is to be understood that the volume 150 may be a different transparent medium such as glass or plastic.

The volume 150 is enclosed by a cylindrical opaque cover 300 that is also arranged around the second part 220 of the lens 200. The cylindrical opaque cover 300 is configured to shield the second part 220 and/or the photodetector 120 from stray light. An example of stray light can be ambient light that is of no interest for detection. The cylindrical opaque cover 300 may have different shapes depending on the lens 200 and the photodetector 120 than that is shown in Figure 2. Yet another example, the cylindrical opaque cover 300 may comprise multiple (sub) elements and may comprise a coating covering the second part 220 of the lens 200. For example, the coating can be a paint that absorbs light or metal coating that reflects light.

The rim 221 is also opaque such that unwanted ambient light does not enter the detector 100 directly through the second part 220 of the lens 200 without first passing through the first part 210. The rim 221 may have a coating that absorbs or reflects ambient light.

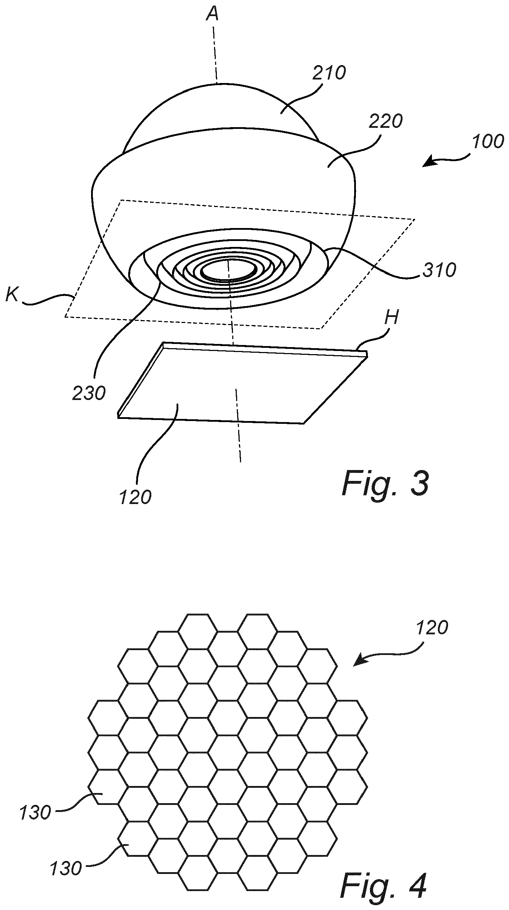

Figure 3 shows a perspective view of a detector 100 extending along an optical axis, A. The detector 100 of Figure 3 corresponds to the detector 100 of Figure 2, and it is referred to Figure 2 and the associated text for an increased understanding. The detector 100 of Figure 3 comprises a lens 200 comprising a first part 210 and a second part 220. The first part 210 is configured to receive light waves. The first part 210 has a hemispherical shape, allowing the first part to receive light waves from a relatively large range of angles of incidence. The second part 220 comprises a plurality of concentric sections 230 in a base side that faces away from the first part 210, and it is configured to transmit the light waves received by the first part 210 on to the photodetector 120 depending on the angle of incidence of light. The base side of the second part 220 has a portion 310 extending in a first plane K. The photodetector 120 extends in a second plane H. The photodetector 120 comprises multiple segments 130 (not shown in Figure 3) configured to receive the light waves received by the first part 210 and transmitted by the second part 220. In Figure 3, the first plane K, and the second plane H extend parallel to each other. The area of the photodetector 120 may be equal, smaller, or larger than the area of the portion 310 of the second part 220.

Figure 4 schematically shows an example of a photodetector 120 that may be used in the detector 100 described herein. The photodetector 120 comprises a plurality of segments 130. The segments 130 are placed adjacently to each other and each has a hexagonal shape, placed in a so-called honeycomb pattern. The exemplified honeycomb pattern provides an efficient manner to organize individually functioning photodetector segments, in order to optimize area and/or material usage of the photodetector 120. It is to be understood that the number of segments 130 and the shape of the segments 130 may differ. For example, the photodetector 120 may comprise fewer segments 130, which furthermore may be rectangular. Each of the segments 130 are configured to function independently of each other. By the term "function independently", it is meant that each segment 130 may detect light waves and generate a signal independently from the functioning of any other segment 130. Furthermore, the signal generated by each of the segment 130 may be distinguishable from one another. Instead of hexagonal, the shapes of the segments 130 may be square, rectangular, triangular, or any other geometric shape. The segments 130 may also have different shapes, meaning that one (first) segment 130 of the photodetector 120 has a certain shape, and another (second) segment 130 of the photodetector 120 has a different shape.

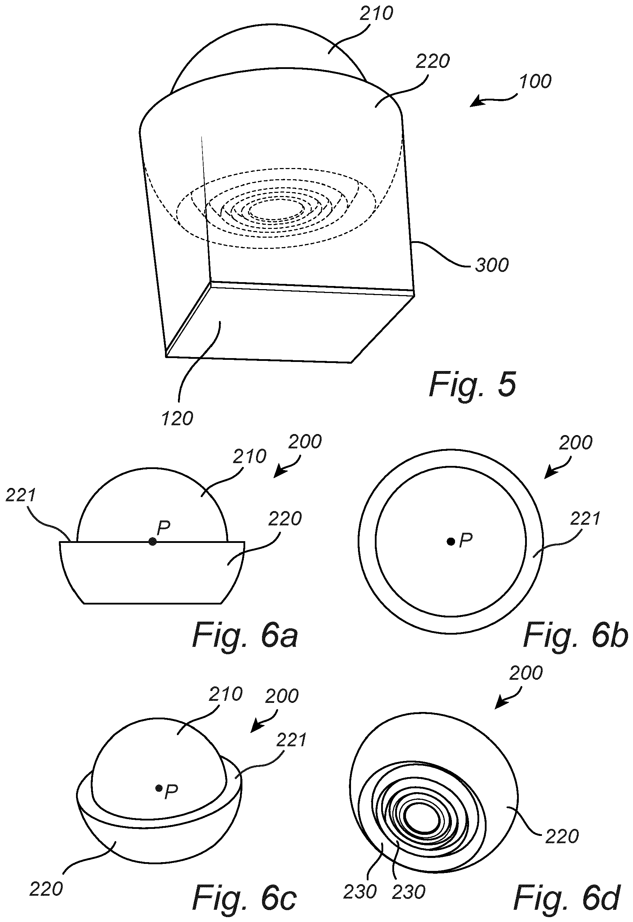

Figure 5 shows a perspective view of the detector 100 as described in Figures 2 and 3. In this embodiment, the detector 100 further comprises a cylindrical opaque cover 300 configured to hinder or mitigate light from entering the detector 100 without first passing through the first part 210 of the lens 200. The cylindrical opaque cover 300 may be a rim extending radially around the second part 220 of the lens 200 of the detector 100.

Figures 6a-6d show different views of the lens 200 according to the invention. For example, the lens 200 can be used in the detector 100 of one or more of the embodiments disclosed in the application.

The lens 200 comprises a first part 210 configured to receive light waves. In Figures 6a-6d, the first part 210 is shaped as a hemisphere of a first sphere with a first radius and a center in a point P on the optical axis of the lens 200. The hemispherical shape is configured to provide a relatively large viewing angle for the lens 200.

The lens 200 further comprises a second part 220 configured to transmit the light waves received by the first part 210. The second part 220 has the form of a spherical segment of a second sphere whose center coincides with the center of the first sphere in point P on the optical axis of the lens 200.

The base side of the second part 220 comprises a plurality of concentric sections 230. Each of the sections 230 comprises a first surface facing away from the optical axis of the lens and having the form of a spherical zone of a third sphere with a center that coincides with the centers of the first and the second spheres in point P on the optical axis of the lens 200.

The radius of the second sphere associated with the second part 220 is larger than the radius of the first sphere associated with the first part 210, which is visualized as the rim 221 that surrounds the first part 210 in Figures 6a-6c. The cylindrical opaque cover 300 described in Figure 5 may also be configured to shield this rim 221 from incoming stray light, such as ambient light that is of no interest for detection.

The second part 220 in Figures 6a-6d further comprises a plurality of concentric sections 230, each having a first surface facing away from the optical axis of the lens 200 and having the form of a spherical zone of a third sphere with a center in point P on the optical axis, some of which have radii smaller than the radius of the first sphere associated with the hemispherical top part 210. The distance between the sections 230 may vary depending on use.

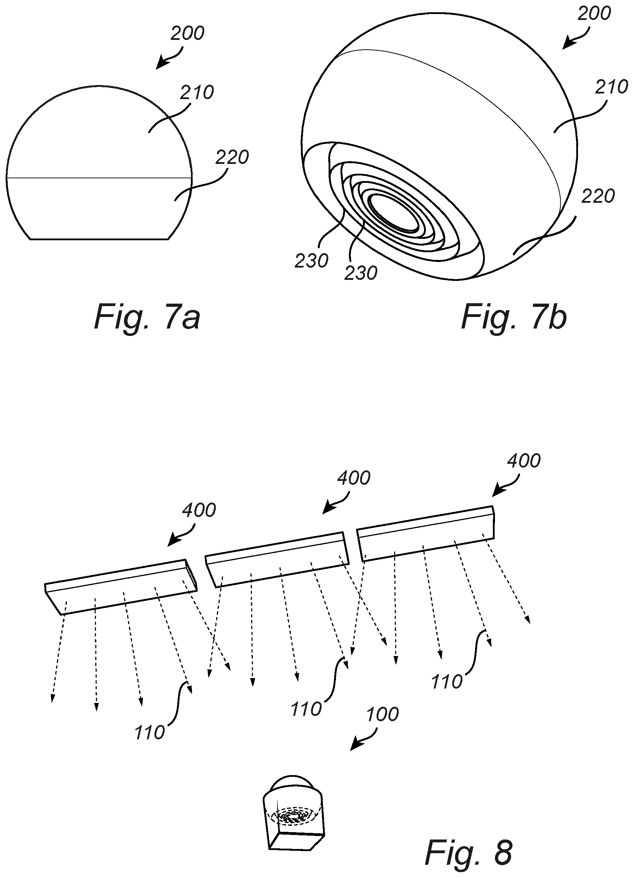

Figures 7a-7b show two different views of a lens 200 that can be used in the detector 100 of the embodiments disclosed in the application. The lens 200 is similar to the one described in Figures 6a-6d with the difference that the second radius of the second sphere associated with the second part 220 is substantially equal to the first radius of the first sphere associated with the hemispherical first part 210. Therefore, the transition from the first part 210 and the second part 220 is smoother in this example.

It is to be understood that the number of concentric sections 230 may differ, as long as there are two or more sections 230, having first surfaces facing away from the optical axis of the lens and having the form of spherical zones of spheres with different radii.

Figure 8 shows a system comprising a detector 100. The system further comprises a plurality of emitters 400 emitting light waves 110. The detector 100 is configured to detect the light waves 110. The plurality of emitters 400 may, for example, be LED lights emitting light waves in the visible or infrared spectrum. It should be noted that the emitters 400 in Figure 8 are indicated schematically. For example, the emitters 400 may be point sources directly in the ceiling or integrated into the luminaire. The emitters 400 may be configured to emit modulated light waves to create a LiFi-system and supply downlink information for establishing an Internet or data connection.

A system as shown in Figure 8 may further comprise a transmitter for emitting modulated light waves in connection with the detector 100. The transmitter for emitting modulated light waves may be able to send information for establishing an internet or data connection. The individual segments of the photodetector in the detector 100 may receive the incoming modulated light waves 110 guided by the lens of the detector 100. This depends on the angles of incidence of the incoming modulated light waves 110. Relative intensity variation measured through the segments of the photodetector will allow determination of the closest emitter and as well as the relative direction of the emitters. This creates the possibility to only establish a connection with a specific emitter 400 with the highest intensity for the best possible connection.

It should be noted that the above-mentioned embodiments illustrate rather than limit the invention and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements.

The mere fact that certain features are recited in mutually different dependent claims does not indicate that a combination of these features cannot be used to advantage. The various aspects discussed above can be combined in order to provide additional advantages. Further, the person skilled in the art will understand that two or more embodiments may be combined.

**Claims**

1. A lens (200) having an optical axis (A), the lens (200) comprising:

    - a first part (210) in the form of a spherical cap of a first sphere with a first radius $r_0$, and
    - a second part (220) in the form of a spherical segment of a second sphere with a second radius $r_j$,

    wherein $r_j$ is equal to or larger than $r_0$, and wherein the centers of the first sphere and the second sphere coincide in a point (P) on the optical axis (A),
    wherein the second part (220) has a top side facing towards the first part (210) and a base side facing away from the first part (210),
    wherein the base side comprises a plurality of concentric sections (230), each section (230) having a first surface (230a) that faces away from the optical axis (A) and a second surface (230b) that faces towards the optical axis (A),
    wherein each first surface (230a) has the form of a spherical zone of a third sphere with a center that coincides with the point (P),
    wherein, for each section (230), the first surface (230a) and the second surface (230b) have a common circular base edge located in a first plane (K) at the base side of the second part (220), and
    wherein the second part (220) is configured to transmit at least one light wave of the light waves received by the first part (210) and to project the at least one light wave via the plurality of concentric sections (230) onto a second plane (H) parallel to the first plane (K).

2. The lens according to claim 1, wherein the spherical zone of at least one first surface (230a) has a third radius $r_i$ corresponding to the third sphere, and wherein $r_i < r_0$.

3. The lens (200) according to claim 1 or 2, wherein the first part (210) has a spherical surface, and wherein the spherical surface is provided with an anti-reflection layer.

4. The lens (200) according to any one of the preceding claims, wherein the lens (200) comprises a polymer.

5. The lens (200) according to any one of the preceding claims, wherein the lens (200) comprises a glass with a refractive index n, wherein $n > 1.5$.

6. The lens (200) according to any one of the preceding claims, wherein the first part (210) is a hemisphere.

7. The lens (200) according to any one of the preceding claims, wherein the first part (210) is configured to receive light waves at angles of incidence up to at least 50 degrees with respect to the optical axis (A).

8. The lens (200) according to any one of the preceding claims, wherein $r_0 < r_i$ so that the top side of the second part (220) defines a rim (221) around the first part (210), and wherein the rim (221) is opaque.

9. A detector (100) for detecting light waves comprising:

   - a lens (200) according to any one of claims 1-7, and
   - a photodetector (120) comprising a plurality of segments (130) arranged in the second plane (H), wherein each segment of the plurality of segments (130) is arranged to receive at least one light wave of the light waves transmitted by the lens (200).

10. The detector according to claim 9, wherein the lens (200) and the photodetector (120) are separated by a volume (150) of air.

11. The detector (100) according to any one of claims 9 and 10, wherein the volume (150) is enclosed by a cylindrical opaque cover (300), and wherein the cylindrical opaque cover (300) is arranged at least partially around the second part (220).

12. The detector (100) according to any one of claims 9 to 11, wherein the cylindrical opaque cover (300) is light absorbing.

13. The detector (100) according to any one of claims 9 to 12, wherein each segment of the plurality of segments (130) comprises a hexagonal form, and wherein the segments of the plurality of segments (130) are arranged adjacent to each other.

14. A detector arrangement comprising:

    - a Universal Serial Bus (USB) device, and
    - a detector (100) according to any one of claims 9 to 13, wherein the detector (100) is communicatively connected to the USB device.

15. A detector system, comprising:

    - a detector (100) according to any one of claims 9 to 13, and
    - at least one emitter (400) configured to emit light waves detectable by the detector (100).

**Patentansprüche**

1. Linse (200), die eine optische Achse (A) aufweist, die Linse (200) umfassend:

   - einen ersten Teil (210) in der Form einer Kugelkalotte einer ersten Kugel mit einem ersten Radius $r_0$, und
   - einen zweiten Teil (220) in der Form eines Kugelsegments einer zweiten Kugel mit einem zweiten Radius $r_j$,

     wobei $r_j$ gleich oder größer als $r_0$ ist, und wobei die Mitte der ersten Kugel und der zweiten Kugel in einem Punkt (P) auf der optischen Achse (A) zusammenfallen, wobei der zweite Teil (220) eine Oberseite, die dem ersten Teil (210) zugewandt ist, und eine Basisseite, die von dem ersten Teil (210) abgewandt ist, aufweist, wobei die Basisseite eine Vielzahl von konzentrischen Bereichen (230) umfasst, wobei jeder Bereich (230) eine erste Oberfläche (230a), die von der optischen Achse (A) abgewandt ist, und eine zweite Oberfläche (230b), die der optischen Achse (A) zugewandt ist, aufweist, wobei jede erste Oberfläche (230a) die Form einer Kugelzone einer dritten Kugel mit einer Mitte, die mit dem Punkt (P) zusammenfällt, aufweist, wobei, für jeden Bereich (230), die erste Oberfläche (230a) und die zweite Oberfläche (230b) eine gemeinsame kreisförmige Basiskante aufweisen, die sich in einer ersten Ebene (K) an der Basisseite des zweiten Teils (220) befindet, und

wobei der zweite Teil (220) konfiguriert ist, um mindestens eine Lichtwelle der Lichtwellen durchzulassen, die durch den ersten Teil (210) empfangen werden, und um die mindestens eine Lichtwelle über die Vielzahl von konzentrischen Bereichen (230) auf eine zweite Ebene (H) parallel zu der ersten Ebene (K) zu projizieren.

2. Linse nach Anspruch 1, wobei die Kugelzone mindestens einer ersten Oberfläche (230a) einen dritten Radius $r_i$ aufweist, der der dritten Kugel entspricht, und wobei $r_i < r_0$.

3. Linse (200) nach Anspruch 1 oder 2, wobei der erste Teil (210) eine Kugeloberfläche aufweist, und wobei die Kugeloberfläche mit einer Antireflexionsschicht versehen ist.

4. Linse (200) nach einem der vorstehenden Ansprüche, wobei die Linse (200) ein Polymer umfasst.

5. Linse (200) nach einem der vorstehenden Ansprüche, wobei die Linse (200) ein Glas mit einem Brechungsindex n umfasst, wobei $n > 1{,}5$.

6. Linse (200) nach einem der vorstehenden Ansprüche, wobei der erste Teil (210) eine Halbkugel ist.

7. Linse (200) nach einem der vorstehenden Ansprüche, wobei der erste Teil (210) konfiguriert ist, um Lichtwellen in Einfallswinkeln bis zu mindestens 50 Grad hinsichtlich der optischen Achse (A) zu empfangen.

8. Linse (200) nach einem der vorstehenden Ansprüche, wobei $r_0 < r_i$, sodass die Oberseite des zweiten Teils (220) einen Rand (221) um den ersten Teil (210) definiert, und wobei der Rand (221) undurchsichtig ist.

9. Detektor (100) zum Detektieren von Lichtwellen, umfassend:

   - eine Linse (200) nach einem der Ansprüche 1 bis 7, und
   - einen Fotodetektor (120), umfassend eine Vielzahl von Segmenten (130), die in der zweiten Ebene (H) angeordnet sind, wobei jedes Segment der Vielzahl von Segmenten (130) angeordnet ist, um mindestens eine Lichtwelle der Lichtwellen zu empfangen, die durch die Linse (200) durchgelassen werden.

10. Detektor nach Anspruch 9, wobei die Linse (200) und der Fotodetektor (120) durch ein Volumen (150) von Luft getrennt sind.

11. Detektor (100) nach einem der Ansprüche 9 und 10, wobei das Volumen (150) durch eine zylindrische undurchsichtige Abdeckung (300) umschlossen ist, und wobei die zylindrische undurchsichtige Abdeckung (300) mindestens teilweise um den zweiten Teil (220) angeordnet ist.

12. Detektor (100) nach einem der Ansprüche 9 bis 11, wobei die zylindrische undurchsichtige Abdeckung (300) lichtabsorbierend ist.

13. Detektor (100) nach einem der Ansprüche 9 bis 12, wobei jedes Segment der Vielzahl von Segmenten (130) eine sechseckige Form umfasst, und wobei die Segmente der Vielzahl von Segmenten (130) angrenzend aneinander angeordnet sind.

14. Detektoranordnung, umfassend:

    - eine Universal-Serial-Bus-Vorrichtung (USB-Vorrichtung), und
    - einen Detektor (100) nach einem der Ansprüche 9 bis 13, wobei der Detektor (100) mit der USB-Vorrichtung kommunikativ verbunden ist.

15. Detektorsystem, umfassend:

    - einen Detektor (100) nach einem der Ansprüche 9 bis 13, und
    - mindestens einen Emitter (400), der konfiguriert ist, um Lichtwellen zu emittieren, die durch den Detektor (100) detektierbar sind.

**Revendications**

1. Lentille (200) ayant un axe optique (A), la lentille (200) comprenant :

   - une première partie (210) sous la forme d'une calotte sphérique d'une première sphère avec un premier rayon $r_0$, et
   - une seconde partie (220) sous la forme d'un segment sphérique d'une deuxième sphère avec un second rayon $r_i$,

     dans laquelle $r_i$ est égal ou supérieur à $r_0$ et dans laquelle les centres de la première sphère et de la deuxième sphère coïncident en un point (P) sur l'axe optique (A), dans laquelle la seconde partie (220) a un côté supérieur tourné vers la première partie (210) et un côté base tourné à l'opposé de la première partie (210), le côté base comprenant une pluralité de sections concentriques (230), chaque section (230) ayant une première surface (230a) qui est orientée à l'opposé de l'axe optique (A) et une seconde surface (230b) qui est orientée vers l'axe optique (A),

dans laquelle chaque première surface (230a) a la forme d'une zone sphérique d'une troisième sphère avec un centre qui coïncide avec le point (P),

dans laquelle, pour chaque section (230), la première surface (230a) et la seconde surface (230b) ont un bord de base circulaire commun situé dans un premier plan (K) au niveau du côté base de la seconde partie (220), et

dans laquelle la seconde partie (220) est configurée pour transmettre au moins une onde lumineuse des ondes lumineuses reçues par la première partie (210) et pour projeter l'au moins une onde lumineuse par l'intermédiaire de la pluralité de sections concentriques (230) sur un second plan (H) parallèle au premier plan (K).

2. Lentille selon la revendication 1, dans laquelle la zone sphérique d'au moins une première surface (230a) a un troisième rayon $r_t$ correspondant à la troisième sphère, et dans laquelle $r_i < r_0$.

3. Lentille (200) selon la revendication 1 ou 2, dans laquelle la première partie (210) a une surface sphérique, et dans leaquelle la surface sphérique est pourvue d'une couche anti-reflet.

4. Lentille (200) selon l'une quelconque des revendications précédentes, dans laquelle la lentille (200) comprend un polymère.

5. Lentille (200) selon l'une quelconque des revendications précédentes, dans laquelle la lentille (200) comprend un verre avec un indice de réfraction n,dans lequel $n > 1,5$.

6. Lentille (200) selon l'une quelconque des revendications précédentes, dans laquelle la première partie (210) est un hémisphère.

7. Lentille (200) selon l'une quelconque des revendications précédentes, dans laquelle la première partie (210) est configurée pour recevoir des ondes lumineuses à des angles d'incidence jusqu'à au moins 50 degrés par rapport à l'axe optique (A).

8. Lentille (200) selon l'une quelconque des revendications précédentes, dans laquelle $r_0 < r_j$ de sorte que le côté supérieur de la seconde partie (220) définit un rebord (221) autour de la première partie (210), et dans laquelle le rebord (221) est opaque.

9. Détecteur (100) permettant de détecter des ondes lumineuses comprenant :

- une lentille (200) selon l'une quelconque des revendications 1 à 7, et
- un photodétecteur (120) comprenant une pluralité de segments (130) agencés dans le second plan (H), dans lequel chaque segment de la pluralité de segments (130) est agencé pour recevoir au moins une onde lumineuse des ondes lumineuses transmises par la lentille (200).

10. Détecteur selon la revendication 9, dans lequel la lentille (200) et le photodétecteur (120) sont séparés par un volume (150) d'air.

11. Détecteur (100) selon l'une quelconque des revendications 9 et 10, dans lequel le volume (150) est enfermé par un couvercle opaque cylindrique (300), et dans lequel le couvercle opaque cylindrique (300) est disposé au moins partiellement autour de la seconde partie (220).

12. Détecteur (100) selon l'une quelconque des revendications 9 à 11, dans lequel le couvercle opaque cylindrique (300) absorbe la lumière.

13. Détecteur (100) selon l'une quelconque des revendications 9 à 12, dans lequel chaque segment de la pluralité de segments (130) comprend une forme hexagonale, et dans lequel les segments de la pluralité de segments (130) sont agencés adjacents les uns aux autres.

14. Agencement de détecteur, comprenant :

- un dispositif de bus série universel (USB), et
- un détecteur (100) selon l'une quelconque des revendications 9 à 13, dans lequel le détecteur (100) est connecté en communication au dispositif USB.

15. Système de détecteur, comprenant :

- un détecteur (100) selon l'une quelconque des revendications 9 à 13, et
- au moins un émetteur (400) configuré pour émettre des ondes lumineuses détectables par le détecteur (100).

*Fig. 1*

*Fig. 2*

Fig. 3

Fig. 4

Fig. 5

Fig. 6a

Fig. 6b

Fig. 6c

Fig. 6d

Fig. 7a

Fig. 7b

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020014467 A
- WO 2019186210 A
- US 2016056899 A
- KR 20170011975 A